# EUROPÄISCHE PATENTSCHRIFT

(11) **EP 1 210 238 B1**
(45) Veröffentlichungstag und Bekanntmachung des Hinweises auf die Patenterteilung: **06.05.2004**
(21) Anmeldenummer: 00965944.2
(22) Anmeldetag: 08.09.2000
(51) Int. Cl.: B60J 7/053, B60J 7/057

(54) **VERFAHREN ZUM BETRIEB EINES SCHIEBEHEBEDACHES**
METHOD FOR OPERATING A SLIDING-LIFTING ROOF
PROCEDE POUR FAIRE FONCTIONNER UN TOIT OUVRANT

(30) Priorität: 10.09.1999 DE 19943234
(43) Veröffentlichungstag der Anmeldung: 05.06.2002
(73) Patentinhaber: DaimlerChrysler AG, 70567 Stuttgart (DE)
(72) Erfinder: KREINER, Steffen, 73730 Esslingen (DE); RODEWALD, Andreas, 71083 Herrenberg (DE)
(86) Internationale Anmeldenummer: PCT/EP2000/008762
(87) Internationale Veröffentlichungsnummer: WO 2001/019634

(56) Entgegenhaltungen:
- DE-A- 3 840 724
- US-A- 3 829 155
- US-A- 4 629 953

## Beschreibung

Die Erfindung betrifft ein Verfahren zum Betrieb eines Schiebehebedaches mit den Merkmalen des Oberbegriffs des Anspruches 1.

Aus der gattungsgemäßen DE 38 40 724 C2 ist ein Schiebehebedach eines Kraftfahrzeuges bekannt. Dessen Deckel ist mittels eines in seiner Drehrichtung umsteuerbaren Elektromotors verstellbar, um eine Öffnungs- oder Schließstellung des Deckels bezüglich der Dachöffnung des Kraftfahrzeuges zu realisieren. In seiner Schiebedachfunktion wird der Deckel aus der Öffnungsstellung in die Schließstellung üblicherweise zunächst in Fahrtrichtung des Kraftfahrzeuges nach vorne geschoben und dann angehoben, damit sich die Außenkanten des Deckels an die Dachdichtung anlegen, welche an dem Öffnungsrand der Dachöffnung angeordnet ist. Nachteilig sind die beim vorgenannten Anheben des Deckels in seine Schließstellung auftretenden Reibungskräfte zwischen dem Deckel und der Dachdichtung. Sie wirken dem Anheben des Deckels in die Schließstellung entgegen. Aufgrund von vorhandenem mechanischen Spiel und nicht ausreichender Eigensteifigkeit des Schiebehebedachverbundes reichen die Stützkräfte des Verstellmechanismus nicht aus, um den Deckel in seiner Funktion als Schiebedach einerseits und in seiner Funktion als Hebedach andererseits in dieselbe Schließstellung zu verstellen. Diese in Hubrichtung unterschiedlichen Schließstellungen bewirken einen optisch ungünstigen Gesamteindruck der Dachhaut des Kraftfahrzeuges. Außerdem kann die in Hubrichtung voneinander abweichende Anordnung der Außenfläche des Deckels (insbesondere in der Schiebedachfunktion) und der benachbarten Dachhaut dazu führen, daß sich auf der Außenseite des Deckels in unerwünschter Weise Nässe sammelt.

Der Erfindung liegt die Aufgabe zugrunde, unterschiedliche Schließstellungen des Deckels eines Schiebehebedaches in seiner Hebedachfunktion und seiner Schiebedachfunktion zu vermeiden.

Diese Aufgabe wird durch die Merkmalskombination des Anspruches 1 gelöst.

Erfindungsgemäß wird der Deckel nach Bewegungsbeginn in Richtung des Öffnungsrandes der Dachöffnung derart bewegungsangetrieben, daß der Deckel die Schließstellung in derselben Bewegungsrichtung erreicht, die auch beim Überführen des Deckels aus seiner Hochkippstellung (= Öffnungsstellung des Hebedaches) in die Schließstellung vorgesehen ist. Auf diese Weise ist der Bewegungsablauf des Deckels unmittelbar vor Erreichen der Schließstellung in der Funktion als Schiebedach derselbe wie in der Funktion als Hebedach. In beiden Funktionen wird die Schließstellung aus derselben Schließrichtung erreicht. Hierdurch ist gewährleistet, daß der Deckel in seiner Schießstellung - unabhängig von seiner Funktion als Hebe- oder Schiebedach - immer in derselben Relativlage zur ihn umgebenden Dachhaut liegt. Unterschiedliche Schließstellungen der Schiebedachfunktion einerseits und der Hebedachfunktion andererseits werden vermieden. Bei der höhenmäßigen Justierung des Deckels muß tatsächlich nur eine einzige gemeinsame Nullstellung (=Schließstellung) berücksichtigt werden. Diese einzige Nullstellung ermöglicht bei entsprechender Justierung einen optisch positiven Gesamteindruck der Außenoberfläche im Übergangsbereich zwischen Deckel und benachbarter Dachhaut. Somit entfällt das herkömmliche aufwendige Justieren der Schließstellung des Deckels auf einen Mittelwert, um die Abweichung der Schließstellung des Deckels als Hebedach von der benachbarten Dachhaut einerseits und die Abweichung der Schließstellung des Deckels als Schiebedach von der benachbarten Dachhaut andererseits möglichst gering zu halten.

Mit dem erfindungsgemäß betriebenen Schiebehebedach lassen sich Fahrzeuge unterschiedlicher Art, insbesondere Kraftfahrzeuge ausstatten.

Der Deckel wird nach seinem Anheben in Richtung des Öffnungsrandes der Dachöffnung über den Öffnungsrand hinaus entlang eines Hubweges weiter angehoben, so daß der Deckel in Richtung seiner Hochkippstellung (= Öffnungsstellung des Hebedaches) verfahren wird. Ist eine gewünschte oder vordefinierte Hubposition in Richtung der Hochkippstellung erreicht, wird die Bewegungsrichtung des Deckels umgekehrt, d.h. der Deckel wird in die Schließstellung des Hebedaches abgesenkt. Somit ist beim Schließvorgang der Schiebedachfunktion der letzte Teil des Bewegungsablaufes derselbe wie der letzte Teil des Bewegungsablaufes beim Schließvorgang der Hebedachfunktion. Die Schließstellung für die Schiebedachfunktion kann deshalb tiefer als bei herkömmlichen Schiebedach-Schließstellungen eingestellt werden. Ein ab bestimmten Geschwindigkeiten durch die Druckverhältnisse innerhalb und außerhalb des Fahrzeugs bedingtes, störende Windgeräusche verursachendes Anheben des Deckels findet deshalb erst ab noch höheren Geschwindigkeiten statt. Die Möglichkeit der tieferen Einstellung des Nullpunktes (Schließstellung) für die Schiebedachfunktion bietet deshalb einen größeren Schutz gegen das Auftreten von geschwindigkeitsbedingten Windgeräuschen am Schiebehebedach.

Gemäß Anspruch 2 erfolgt nach dem Antreiben des Deckels in Richtung des Öffnungsrandes der Dachöffnung der weitere Bewegungsablauf des Deckels geschwindigkeitsabhängig. Der Deckel wird nur bei bestimmten Geschwindigkeiten des Fahrzeugs derart bewegungsangetrieben, daß er die Schließstellung in derselben Schließstellung erreicht wie beim Schließen aus seiner Hochkippstellung heraus. Beispielsweise erfolgt dieser Bewegungsantrieb nur in einem bestimmten Geschwindigkeitsintervall oder unterhalb oder oberhalb einer vorbestimmten Geschwindigkeit (= Grenzgeschwindigkeit, z.B. 50 km/h oder 80 km/h). Dies ist sinnvoll, da bei bestimmten Geschwindigkeiten die Druckverhältnisse innerhalb und außerhalb des Fahrzeugs den Deckel derart beaufschlagen, daß sie ihn ohnehin in die gewünschte Schließstellung befördern. In einem solchen Fall ist kein "künstlicher" Antrieb (z.B. Antriebsmotor) erforderlich, um den Deckel in seiner Schiebedachfunktion in die Schließstellung der Hebedachfunktion zu überführen.

Die Maßnahmen nach Anspruch 3 berücksichtigen die natürliche Sogwirkung auf den Deckel, der ab einer bestimmten Geschwindigkeit (= Grenzgeschwindigkeit) des Fahrzeugs auftritt, um die gewünschte Schließstellung des Deckels in seiner Schiebedachfunktion zu erreichen. Ein "künstlicher" Bewegungsantrieb hebt den Deckel dann nur über die Dachöffnung hinaus an, wenn der Schließvorgang für die Schiebedachfunktion bei Geschwindigkeiten unterhalb oder bis einschließlich der Grenzgeschwindigkeit ausgelöst wird bzw. ausgeführt wird. Die vorgenannte Abhängigkeit des Bewegungsablaufes des Deckels beim Schließvorgang von einer Grenzgeschwindigkeit hat außerdem den Vorteil, daß bei höheren Geschwindigkeiten nicht zwei störende "Schließgeräusche" - einerseits durch den künstlich erzeugten Bewegungsablauf des Deckels und andererseits durch die natürliche Druckwirkung - entstehen.

Anspruch 4 schlägt einen automatisierten Bewegungsablauf für den Deckel vor. Hierdurch kann ein für den Schließvorgang geeigneter Bewegungsablauf vordefiniert und in einer geeigneten, den Deckel über einen Antriebsmotor bewegungssteuernden Vorrichtung programmiert werden. Der Bewegungsablauf kann komfortabel beispielsweise durch ein Auslösesignal in Form eines betätigten Bedienelements ausgelöst werden.

Die Maßnahmen der Ansprüche 5 bis 7 ermöglichen es, daß infolge von konstruktionstechnischen Änderungen erforderliche Änderungen des Bewegungsablaufs bzw. Änderungen von Längen einzelner Teilstrecken des Bewegungsablaufs sich durch Umprogrammierung jederzeit leicht realisieren lassen. Auf diese Weise ist der Bewegungsablauf des Deckels beim Schließen in der Schiebedachfunktion ohne besonderen technischen Aufwand an verschiedene Fahrzeugtypen anpaßbar, indem einzelne Parameter des Bewegungsablaufes (z.B. Längen von Teilstrecken, insbesondere die Länge des Überhubweges über die Dachöffnung hinaus) entsprechend dem jeweiligen Fahrzeugtyp als vorbestimmte Daten neu programmiert werden. Die vorgenannte Grenzgeschwindigkeit kann ebenfalls vorbestimmt, programmiert und ggfs. mit einem neuen Wert umprogrammiert werden.

Die Erfindung wird anhand der in den Figuren dargestellten Ausführungsbeispiele näher erläutert. Es zeigen:
- Fig. 1: eine schematische Teildarstellung eines Schiebehebedachsystems und
- Fig. 2a bis 2d: schematisch aufeinanderfolgende Positionen des Dekkels in seiner Funktion als Schiebedach beim erfindungsgemäßen Schließvorgang.

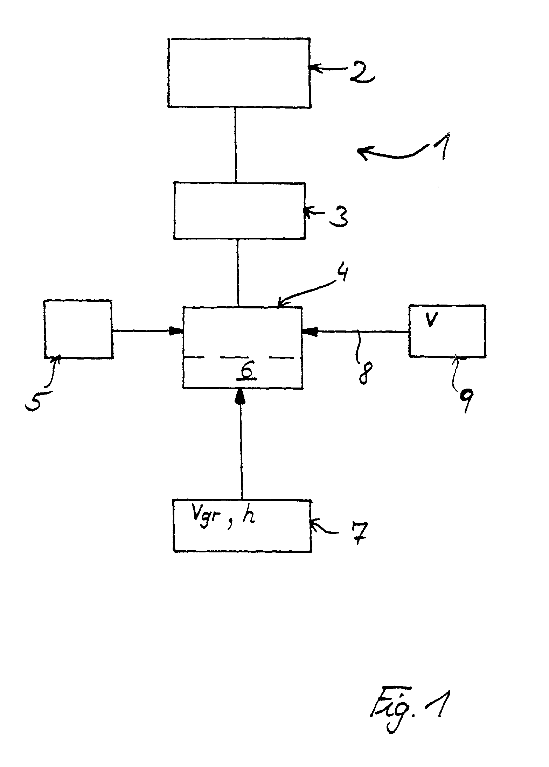

Das Schiebehebedachsystem 1 gemäß Fig.1 enthält ein Schiebehebedach mit einem Deckel 2, welches von einem Dachantrieb 3 mit.einem hier nicht weiter dargestellten Elektromotor angetrieben wird. Der Dachantrieb 3 wird von einer Steuereinrichtung 4 gesteuert. An die Steuereinrichtung 4 ist eine Betätigungseinrichtung 5, z.B. eine oder mehrere manuelle Bedientasten, zur Betätigung des Deckels 2 angeschlossen.

Die Steuereinrichtung 4 enthält vorzugsweise einen Positionszähler oder einen Positionsschaltereingang mit einer Timersteuerung, um einen korrekten Bewegungsablauf des Dekkels 2 zu unterstützen. Die Steuereinrichtung 4 umfaßt Speichermittel 6, um den Bewegungsablauf bzw. den zurückzulegenden Weg des Deckels 2 zu programmieren. Hierzu ist die Steuereinrichtung 4 mit vorzugsweise externen Eingabemitteln 7 verbunden. Bei dieser Verbindung handelt es sich vorzugsweise um eine lösbare Steckverbindung. Mittels der Eingabemittel 7 werden vorbestimmte bzw. vordefinierte Daten in die Steuereinrichtung 4 programmiert. Diese vordefinierten Daten umfassen mindestens die Länge des nachfolgend zu erläuternden "Überhubes" des Deckels 2 über die Dachöffnung des Fahrzeugs hinaus. Dieser Überhub wird benötigt, um den Deckel 2 aus seiner Öffnungsstellung in die gemeinsame Schließstellung von Hebedach- und Schiebedachfunktion zu überführen. Mittels der Programmierung seines Bewegungsablaufes bzw. seines zurückzulegenden Weges wird der Deckel 2 in die gewünschte Schließstellung automatisiert überführt. Auch ein vorbestimmter Wert einer Grenzgeschwindigkeit v_{gr} kann über die Eingabemittel 7 programmiert werden.

Über eine Signalleitung 8 empfängt die Steuereinrichtung 4 den Wert der aktuellen Geschwindigkeit v des Fahrzeugs. Dieser Wert wird in der Steuereinrichtung 4 mit einem einprogrammierten vorbestimmten Wert der Grenzgeschwindigkeit v_{gr} verglichen. Das Vergleichsergebnis entscheidet darüber, ob der Deckel 2 mit dem noch zu erläuternden Überhub oder ohne ihn aus seiner Öffnungsstellung in die Schließstellung überführt wird. Dieser Vergleich kann unmittelbar vor Auslösung des Schließvorgangs und/oder während des Schließvorgangs durchgeführt werden. Der Vergleich kann auch in regelmäßigen Zeitintervallen durchgeführt werden.

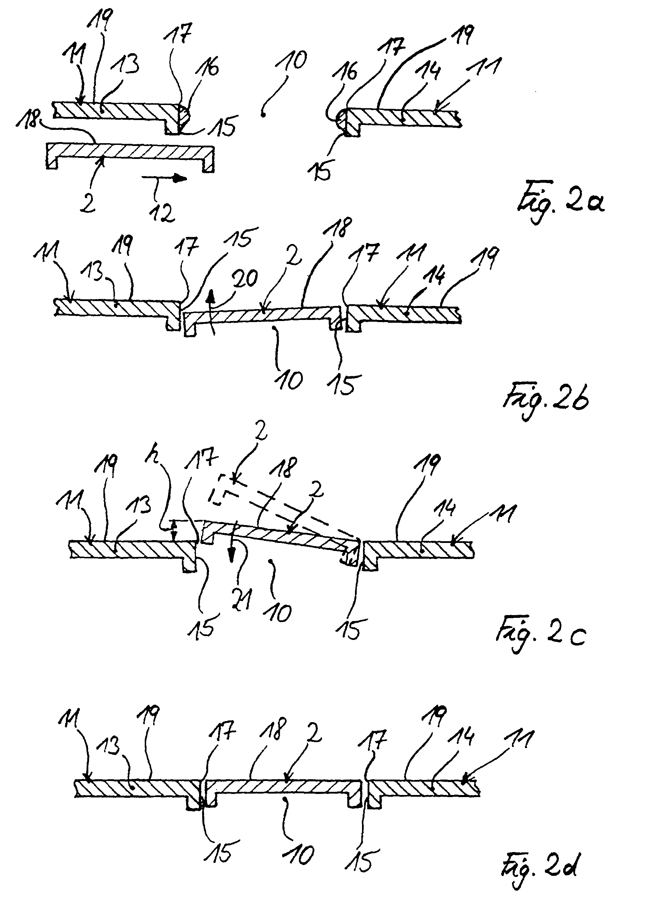

Aufgrund des vorgenannten Vergleiches ist das Auslösen oder der Ablauf des erläuterten Schließvorganges von der aktuellen Geschwindigkeit v des Fahrzeuges abhängig. Gilt beispielsweise v ≤ v_{gr} (z.B. 50 km/h), wird der Deckel 2 gemäß Fig.2c über die Dachaußenfläche 19 hinaus angehoben, während bei v > v_{gr} ein derartiges Anheben durch den Dachantrieb 3 unterbleibt.

Über die Signalleitung 8 empfängt die Steuereinrichtung 4 aktuelle Meßsignale einer Meßeinrichtung 9, z.B. eines Meßfühlers, Signalaufnehmers etc.. Neben der aktuellen Geschwindigkeit v können über die Signalleitung 8 noch weitere Meßsignale anderer physikalischer Größen von der Steuereinrichtung 4 empfangen und verarbeitet werden.

Nachfolgend wird das Verfahren für den Betrieb des Deckels 2 zum Schließen einer Dachöffnung 10 eines Fahrzeuges aus einer die Dachöffnung 10 größtenteils freigebenden Öffnungsstellung (Fig.2a) heraus erläutert.

Die Dachöffnung 10 ist von einem festen Dachteil 11, d.h. einer festen Dachhaut des Fahrzeugs umgeben. Der lediglich schematisch und teilweise dargestellte Dachteil 11 weist einen in Schubrichtung 12 des zu schließenden Deckels 2 hinteren Dachbereich 13 und einen vorderen Dachbereich 14 auf. Der Innenrand 15 der Dachöffnung 10 ist mit einer üblicherweise in sich geschlossenen und in einer Ebene quer zur Zeichenblattebene angeordneten Dichtung 16 besetzt. Diese Dichtung 16 ist in den Fig.2b bis Fig.2d lediglich der zeichnerischen Einfachheit halber nicht dargestellt. An dem Deckel 2 kann ebenfalls eine mit dem Innenrand 15 korrespondierende Dichtung zur Abdichtung des Schiebehebedaches angeordnet sein. Diese Dichtung kann die Dichtung 16 ergänzen oder anstatt der Dichtung 16 vorgesehen sein. In diesem Zusammenhang sei auch erwähnt, daß die in den Figuren erkennbaren Bauteile sowie deren Relativanordnungen lediglich schematisch und nicht maßstabsgetreu dargestellt sind.

Wie bereits gesagt, befindet sich der Deckel 2 in Fig.2a in einer Öffnungsstellung. Damit der Deckel 2 seine die Dachöffnung 10 verschließende Schließstellung erreicht, wird er aus seiner Öffnungsstellung heraus zunächst in Schubrichtung 12 verschoben (Fig.2a). Danach wird der Dekkel 2 in Richtung eines äußeren Öffnungsrandes 17 der Dachöffnung 10 nach Art einer Schwenkbewegung angehoben, damit die dem Fahrzeuginnenraum abgewandte Außenfläche 18 des Deckels 2 möglichst bündig mit der Dachaußenfläche 19 des festen Dachteiles 11 abschließt. Die hierbei erreichte Schließstellung soll der Schließstellung des Deckels 2 in seiner Hebedachfunktion, d.h. der beim Schließen der Dachöffnung 10 aus der Hochkippstellung (diese Stellung des Deckels 2 ist in Fig.2c strichliniert dargestellt) des Dekkels 2 heraus erzielten Schließstellung, entsprechen. Aufgrund der beim herkömmlichen Anheben des Deckels 2 gemäß Fig.2b in seine Schließstellung auftretenden Reibungskräfte zwischen dem Deckel 2 und der Dichtung 16 weichen die beiden Schließstellungen (in der Hebedachfunktion einerseits und in der Schiebedachfunktion andererseits) herkömmlich jedoch oftmals mehr oder weniger stark voneinander ab. Diese Abweichungen entstehen auch aufgrund von vorhandenem mechanischen Spiel und nicht ausreichender Eigensteifigkeit des Schiebehebedachverbundes, wodurch die Stützkräfte des Verstellmechanismus nicht ausreichen, um das Schiebehebedach in seiner Funktion als Schiebedach einerseits und in seiner Funktion als Hebedach andererseits in dieselbe Schließstellung zu verstellen.

Der Deckel 2 wird deshalb in Hubrichtung 20 über den äußeren Öffnungsrand 17 hinaus entlang eines vorbestimmten Hubweges h in Richtung der Hochkippstellung angehoben (Fig.2c). Es sei erwähnt, daß in Fig.2c die Hochkippstellung durch strichlinierte Darstellung des Deckels 2 angedeutet ist und daß die Hochkippstellung selbst während des erläuterten Schließvorganges nicht erreicht wird. Nachdem der Deckel 2 entlang des Hubweges h angehoben worden ist, kehrt die Steuereinrichtung 4 die Antriebsrichtung des Dachantriebs 3 um, so daß der Deckel 2 in Gegenhubrichtung 21 in die Schließstellung abgesenkt wird (Fig.2d). Zusammengefaßt wird das Schiebedach in derselben Richtung (hier: Gegenhubrichtung 21) angetrieben wie das Hebedach, um die Schließstellung zu erreichen. Somit läßt sich für den Dekkel 2 in beiden Funktionen - Schiebedach und Hebedach - komfortabel dieselbe Schließstellung, d.h. eine gemeinsame Schließstellung erzielen.

## Patentansprüche

1. Verfahren für den Betrieb des Deckels (2) eines Schiebehebedaches zum Schließen einer Dachöffnung (10) eines Fahrzeuges aus einer die Dachöffnung (10) zumindest teilweise freigebenden Öffnungsstellung heraus, mit folgenden Verfahrensschritten:
der Deckel (2) wird zum Schließen
a) in den Bereich der Dachöffnung (10) verschoben und
b) in Richtung eines Öffnungsrandes (17) der Dachöffnung (10) bewegt,
**gekennzeichnet durch**
folgende weiteren Verfahrensschritte:
c) der Deckel (2) wird nach Beginn der Bewegung in Richtung des Öffnungsrandes (17) der Dachöffnung (10) derart bewegungsangetrieben, daß er in Richtung des Öffnungsrandes (17) der Dachöffnung (10) angehoben wird und danach
c1) über den Öffnungsrand (17) hinaus entlang eines Hubweges (h) in Richtung der Hochkippstellung angehoben wird und danach
c2) in seine Schließstellung abgesenkt wird,
so daß der Deckel (2) die Schließstellung in derselben Schließrichtung (21) erreicht wie beim Schließen aus seiner Hochkippstellung heraus.

2. Verfahren nach Anspruch 1,
**dadurch gekennzeichnet,**
**daß** der Deckel (2) in Abhängigkeit der Geschwindigkeit (v) des Fahrzeugs derart bewegungsangetrieben wird, daß er die Schließstellung in derselben Schließrichtung (21) erreicht wie beim Schließen aus seiner Hochkippstellung heraus.

3. Verfahren nach Anspruch 2,
**dadurch gekennzeichnet,**
**daß** der Deckel (2) nur bei einer Fahrzeug-Geschwindigkeit (v) kleiner oder gleich einer vorbestimmten Grenzgeschwindigkeit (v_{gr}) entlang des Hubweges (h) angehoben wird.

4. Verfahren nach Anspruch 1,
**dadurch gekennzeichnet,**
**daß** der Deckel (2) automatisiert bewegungsangetrieben wird.

5. Verfahren nach Anspruch 1,
**dadurch gekennzeichnet,**
**daß** der Deckel (2) mittels eines von einer programmierbaren Steuereinrichtung (4) gesteuerten Dachantriebs (3) angetrieben wird.

6. Verfahren nach Anspruch 5,
**dadurch gekennzeichnet,**
**daß** die Steuereinrichtung (4) mit vorbestimmten Daten (h, v_{gr}) programmiert wird.

7. Verfahren nach den Ansprüchen 1 und 6,
**dadurch gekennzeichnet,**
**daß** die vorbestimmten Daten mindestens die Länge des Hubweges (h) umfassen.

## Claims

1. Method for the operation of the cover (2) of a tilt/slide sunroof to close a roof opening (10) of a vehicle from an open position in which the roof opening (10) is at least partially uncovered, comprising the following steps:
to close the sunroof, the cover (2) is
a) moved into the region of the roof opening (10) and
b) moved towards an opening edge (17) of the roof opening (10),
**characterised by**
the following further steps:
c) after starting its movement towards the opening edge (17) of the roof opening (10), the movement of the cover (2) is so controlled that it is raised towards the opening edge (17) of the roof opening (10) and then
c1) raised beyond the opening edge (17) along a stroke path (h) towards the tilt position and finally
c2) lowered into its closed position, so that the cover (2) reaches its closed position in the same closing direction (21) as when being closed from its tilt position.

2. Method according to claim 1,
**characterised in that**
the movement of the cover (2) is so controlled in dependence on the speed (v) of the vehicle that it reaches its closed position in the same closing direction (21) as when being closed from its tilt position.

3. Method according to claim 2,
**characterised in that**
the cover (2) is raised along the stroke path (h) only at a vehicle speed (v) lower than or equal to a predetermined limit speed (v_{gr}).

4. Method according to claim 1,
**characterised in that**
the movement of the cover (2) is automated.

5. Method according to claim 1
**characterised in that**
the cover (2) is driven by means of a roof drive unit (3) controlled by a programmable controller (4).

6. Method according to claim 5
**characterised in that**
the controller (4) is programmed with predetermined data (h, v_{gr}).

7. Method according to any of claims 1 to 6,
**characterised in that**
the predetermined data include at least the length of the stroke path (h).

## Revendications

1. Procédé d'actionnement du couvercle (2) d'un toit basculant-coulissant permettant de fermer une ouverture de toit (10) d'un véhicule à partir d'une position d'ouverture libérant au moins en partie l'ouverture de toit (10), comportant les étapes de procédé suivantes :
pour la fermeture, le couvercle (2) est
a) déplacé dans la zone de l'ouverture de toit (10) et
b) déplacé en direction d'une bordure d'ouverture (17) de l'ouverture de toit (10),
**caractérisé par**
l'étape de procédé supplémentaire suivante :
c) après le début du mouvement en direction de la bordure d'ouverture (17) de l'ouverture de toit (10), le couvercle (2) est mis en mouvement de telle sorte qu'il est soulevé en direction de la bordure d'ouverture (17) de l'ouverture de toit (10), puis
c1) est soulevé par-dessus la bordure d'ouverture (17) le long d'une course de levage (h) en direction de la position de basculement haute, puis
c2) est abaissé dans sa position de fermeture, de telle sorte que le couvercle (2) atteint la position de fermeture dans la même direction de fermeture (21) que lors de la fermeture à partir de sa position de basculement haute.

2. Procédé selon la revendication 1, **caractérisé en ce que** le couvercle (2) est mis en mouvement en fonction de la vitesse (v) du véhicule de telle sorte qu'il atteint la position de fermeture dans la même direction de fermeture (21) que lors de la fermeture à partir de sa position de basculement haute.

3. Procédé selon la revendication 2, **caractérisé en ce que** le couvercle (2) est soulevé le long de la course de levage (h) uniquement pour une vitesse du véhicule (v) inférieure ou égale à une vitesse limite prédéterminée (v_{gr}).

4. Procédé selon la revendication 1, **caractérisé en ce que** le couvercle (2) est mis en mouvement de façon automatisée.

5. Procédé selon la revendication 1, **caractérisé en ce que** le couvercle (2) est entraîné au moyen d'un entraînement de toit (3) commandé par un dispositif de commande (4) programmable.

6. Procédé selon la revendication 5, **caractérisé en ce que** le dispositif de commande (4) est programmé avec des données prédéterminées (h, v_{gr}).

7. Procédé selon les revendications 1 et 6, **caractérisé en ce que** les données prédéterminées comprennent au moins la longueur de la course de levage (h).
